# EUROPEAN PATENT SPECIFICATION

(11) **EP 1 710 986 B1**
(45) Date of publication and mention of the grant of the patent: **12.12.2007**
(21) Application number: 06007132.1
(22) Date of filing: 04.04.2006
(51) Int. Cl.: H04M 1/02, G06F 1/16

(54) **Folder-type portable communication device having sliding display unit**
Faltbares und tragbares Kommunikationsgerät mit verschiebbarer Anzeige
Appareil de communication portable et pliable avec un écran coulissant

(30) Priority: 04.04.2005 KR 20050027985
(43) Date of publication of application: 11.10.2006
(73) Proprietor: Samsung Electronics Co., Ltd., Yeongtong-gu Suwon-si, Gyeonggi-do (KR)
(72) Inventor: Young, S. Kim, Yeongtong-gu Suwon-si Gyeonggi-do (KR)
(74) Representative: Grünecker, Kinkeldey, Stockmair & Schwanhäusser Anwaltssozietät

(56) References cited:
- EP-A- 1 357 726
- EP-A- 1 542 433
- US-A- 5 414 444
- US-A1- 2004 228 077
- US-B1- 6 233 469
- US-B1- 6 522 529
- PATENT ABSTRACTS OF JAPAN vol. 2003, no. 12, 5 December 2003 (2003-12-05) & JP 2005 114759 A (CANON INC), 28 April 2005 (2005-04-28)

## Description

### BACKGROUND OF THE INVENTION

### 1. Field of the Invention

The present invention relates to portable communication devices including cellular phones, Personal Digital Assistants (referred to as PDA), Personal Communication System (referred to as PCS) phones, camera phones, game phones and the like, and more particularly to portable communication devices having a sliding display unit which can be used for a chatting mode and a game mode.

### 2. Description of the Related Art

In general, the term "a portable communication device" means an electronic device which a user can carry with him/her while communicating with another user wire-lessly. In consideration of portability, the trend in the design of such a portable communication device has been towards compactness, slimness and lightness, but also towards providing multimedia capabilities to allow the user to pursue a wider variety of functions. In particular, future portable communication devices will be not only used for many functions while still being compact and light, but will also be modified to be suitable for functioning in a multimedia environment and for providing Internet access and functions.

Conventional portable communication devices may be classified into various types according to their appearance, such as bar-type portable communication devices, flip-type portable communication devices, and folder-type portable communication devices. The bar-type portable communication device has a single housing shaped like a bar. The flip-type portable communication device has a flip panel which is pivotably mounted to a bar-shaped housing by a hinge unit. The folder-type portable communication device has a folder coupled to a single bar-shaped housing by a hinge unit in such a manner that the folder can be rotated in order to be folded or unfolded with respect to the housing.

Further, portable communication devices may be classified as neck wearable type devices and wrist wearable type devices, according to the position at or the way in which a user wears the device. The neck wearable type device is one which a user wears around the neck using a lanyard or necklace, while the wrist wearable type device is one which a user wears around the wrist.

Additionally, portable communication devices may be classified as rotation-type devices and sliding-type devices according to ways of opening and closing the devices. In the rotation-type portable communication device, two housings are coupled to each other in such a manner that one housing rotates to be opened or closed relative to the other while the housings are facing each other. In the sliding-type portable communication device, two housings are coupled to each other in such a manner that one housing slides to be opened or closed relative to the other. The various classifications of portable communication devices are easily understood by those skilled in the art.

Further, each of the conventional portable communication devices is now capable of high-speed data communication as well as voice communication. That is, according to the increase of consumer demands, various services will be provided using wireless communication technology for transmitting and receiving data at a high speed.

It is a present tendency that a camera lens may be mounted to the portable communication device, and that it is possible to transmit image signals and the like. Current portable communication devices may be provided with an embedded or external camera lens module. Therefore, it is possible to perform image communication with a desired partner or to photograph a desired subject.

In the conventional sliding-type portable communication device, however, a housing can slide in only one direction with respect to the other housing and the sliding type portable communication device has only one display unit. Therefore, it is inconvenient for a user to use the conventional portable communication device. In the conventional sliding-type portable communication device, particularly, it is difficult for a user to quickly and accurately operate keys on a body of the portable communication device with both hands in the game mode or the chatting mode. Further, the conventional sliding-type portable communication device has a display unit which typically can display only a portrait mode screen and is limited in displaying a wide landscape mode screen. Thus, there has been a demand for a portable communication device capable of displaying a wide landscape mode screen and having keys which can be operated quickly and accurately.

When consumers purchase communication devices having multimedia functions, the portable communication device tends to have various incorporated functions including a voice communication function, an image communication function, a game player function, a music player function, a TV or video player function, a chatting function, an Internet access function and the like, in addition to the simple voice communication function. When the mobile communication environment changes, it is necessary to provide corresponding various user interfaces. Concerning the convenience of the portable communication device, there is a tendency that a choice of portable communication device is made according to the user interface circumstances.

In the portable communication device, therefore, it is important to provide a convenient user interface including a data input interface and a data output interface, which are essential. Thus, there are many demands for a portable communication device having a display unit which is able to provide user with a convenient user interface environment.

EP-A-1 357 726 discloses a portable telephone with a body and a folder and a hinge unit therebetween. The display unit is folded or unfolded together with a folder and may be slid along the folder.

US-B1-6 233 469 discloses a portable wireless information terminal with a display unit that may slide along the body of the device and may also be rotated through a hinge.

US-A-2004/228077 discloses a height adjustable computer monitor, wherein such a computer also has a body and a folder. A hinge unit is arranged therebetween. The display unit is provided in the folder and is adapted to slide in longitudinal direction of the folder.

US-B-6 522 529 discloses another computer with a rotatable and also slidingly supported display for a screen.

EP-A-1 542 433, published after the priority date of the present application, discloses a portable terminal with a body, a folder, and a hinge unit therebetween. The folder provides a display unit rotationally disposed on the folder. There is also a sliding means for moving the display unit in longitudinal direction of the folder.

It is an object of the present invention to provide a portable communication device according to which an optimal user interface environment is provided so that a user can quickly and accurately operate keys while displaying landscape mode images in a chatting mode or a game mode, wherein simultaneously such sliding display unit is safely received in opened and closed positions.

This object is solved by the features of claim 1.

Advantageous embodiments of the invention are disclosed by the subclaims.

### BRIEF DESCRIPTION OF THE DRAWINGS

The above and other objects, features, and advantages of the present invention will be more apparent from the following detailed description taken in conjunction with the accompanying drawings, in which:
FIG. 1 is a perspective view showing a folder-type portable communication device according to a preferred embodiment of the present invention which has a sliding and foldable housing;
FIG. 2 is a front view of the folder-type portable communication device shown in FIG. 1;
FIG. 3 is a side view of the folder-type portable communication device shown in FIG. 1;
FIG. 4 is a perspective view of the folder-type portable communication device according to the preferred embodiment of the present invention, in which a folder of the portable communication device is open; and
FIGS. 5 and 6 are perspective views of the folder-type portable communication device according to the preferred embodiment of the present invention, in which a sliding display unit has slid on a body and a folder of the portable communication device.

### DETAILED DESCRIPTION OF THE PREFERRED EMBODIMENT

Hereinafter, preferred embodiments of the present invention will be described with reference to the accompanying drawings. In the following description of the present invention, a detailed description of known functions and configurations incorporated herein is omitted to avoid making the subject matter of the present invention unclear.

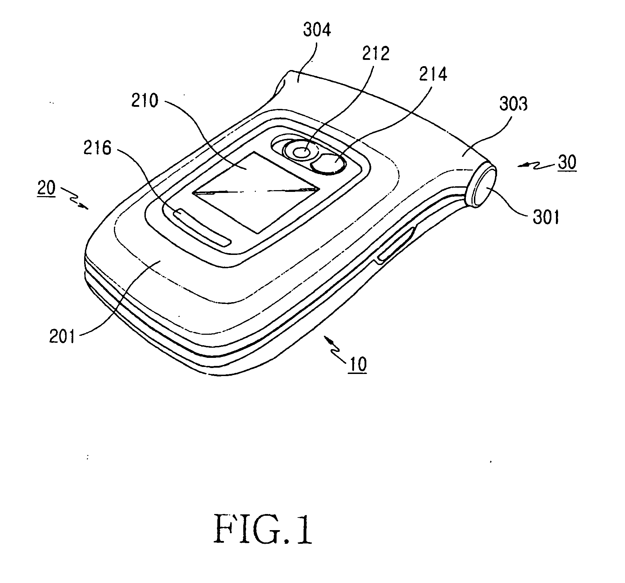

As shown in FIGS. 1, 4 and 5, the portable communication device according to the present invention includes a body 10, a folder 20 which rotates about a hinge axis A to be folded or unfolded with respect to the body 10, a sliding display unit 40 which is folded or unfolded together with the folder 20 with respect to the body 10 and which can slide in a longitudinal direction of the folder 20 so as to open and close a region of inner surface 101 or 202 of the body 10 or the folder 20, and a hinge unit 30 for pivotably connecting the folder 20 to the body 10.

After the folder 20 rotates and the sliding display unit 40 then completely slides, the body 10 and the folder 20 may be symmetrically placed on a planar surface. Further, the sliding display unit 40 is positioned between end portions of the body 10 and folder 20 to partially overlap with the body 10 and the folder 20, so that a region near the end of the body 10 on the inner surface 101 of the body 10 is exposed while a region near the end of the folder 20 on the inner surface 202 of the folder is exposed.

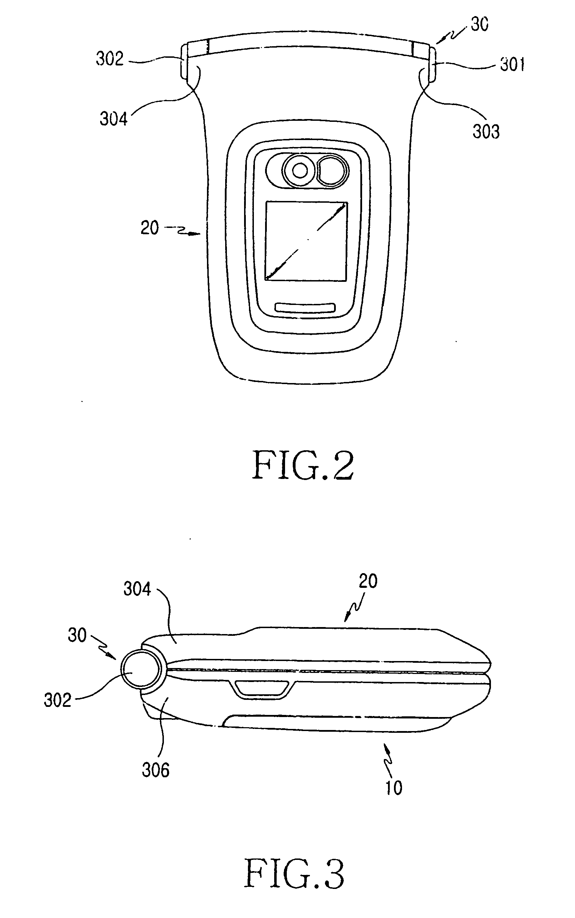

As shown in FIGS. 1 to 3, the folder 20 may be provided with an auxiliary display unit 210, a camera lens 212 near a side of the auxiliary display unit 210 and a call-indication lamp 216 near the other side of the auxiliary display unit 210 which are arranged on an outer surface of the folder 20. Meanwhile, the hinge unit 30 includes a pair of hinge covers 301 and 302 and a pair of first and second hinge reinforcement portions 303, 304, 305 and 306 in order to enhance the structural integrity and avoid weakness due to impact which can be caused by a rotation of the folder 20 with respect to the body 10 or by a drop of the portable communication device. The hinge covers 301 and 302 are preferably made from metal sheets, which are attached to both ends of the hinge unit 30 to supply structural rigidity to the hinge unit 30. Where the hinge unit 30 projects coaxially with an axis of the hinge axis A and may be subjected to impact when the portable communication device is dropped, the hinge covers 301 and 302 can protect the hinge unit 30 from the impact applied to the hinge unit 30. Furthermore, the first and second hinge reinforcement portions 303, 304, 305 and 306 include a pair of first hinge reinforcement portions and a pair of second hinge reinforcement portions each of which protrudes in a coaxial direction with the axis of the hinge axis A, so as to provide structural rigidity to the body 10 and folder 20. Thereby, the body 10 and the folder 20 can resist a force which may be caused by the over-rotation of the folder 20. In particular, the first hinge reinforcement portions 305 and 306 protrude along the axis of the hinge axis A from the body 10 outwardly while the second hinge reinforcement portions 303 and 304 protrude along the axis of the hinge axis A from the folder 20. Preferably, the first hinge reinforcement portions 305 and 306 have a gradually increasing width from the body 10 towards the end of the hinge axis A, while the second hinge reinforcement portions 303 and 304 have a gradually increasing width from the folder 20 towards the end of the hinge axis A.

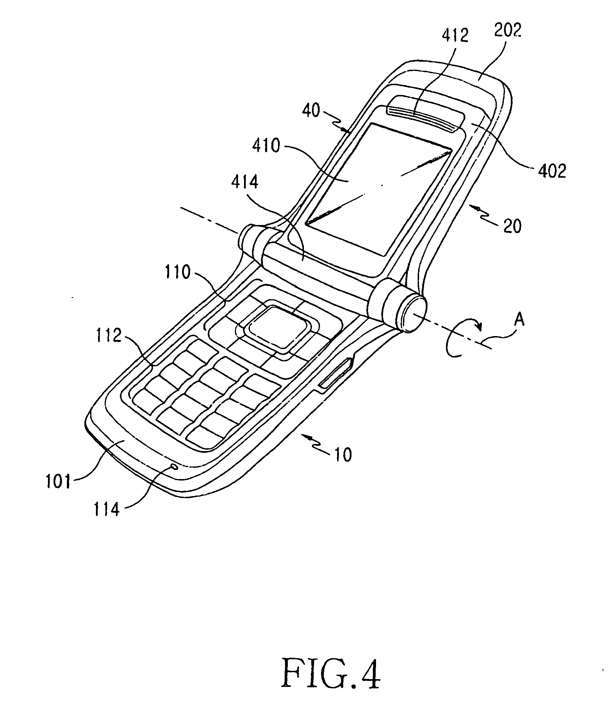

As shown in FIGS. 4 to 6, on the inner surface 101 of the body 10, there are disposed a first key pad 110 which is selectively opened and closed as a result of the sliding movement of the sliding display unit 40 after the folder 20 is unfolded, and a second key pad 112 which is always open without regard to the sliding movement of the sliding display unit 40 after the folder 20 is unfolded. A third key pad 220 is disposed on the inner surface 202 of the folder 20, which is selectively opened as a result of the sliding movement of the sliding display unit 40.

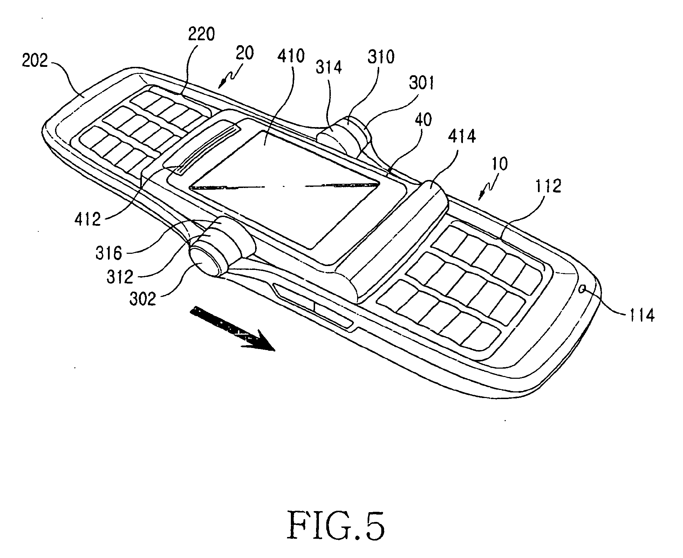

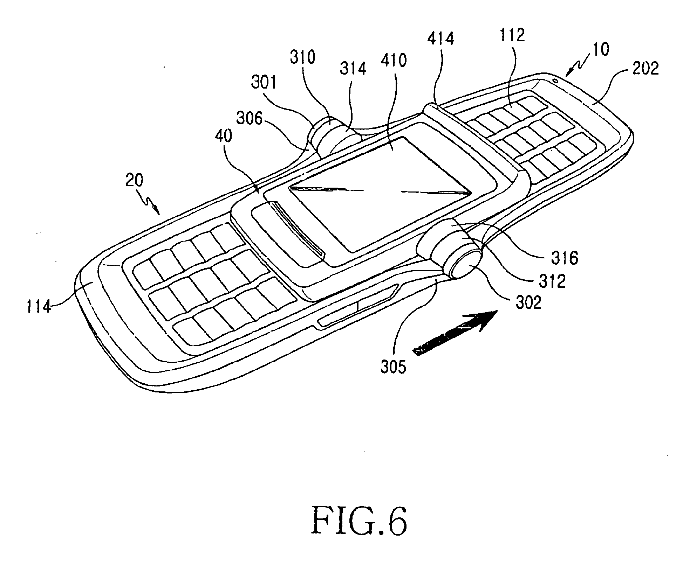

As shown in FIGS. 5 and 6, when the sliding display unit 40 is fully slid, the first key pad 110 is hidden by the sliding display unit 40 while the second and third key pads 112 and 220 are completely open. Thus, the sliding display unit 40 is placed between the second key pad 112 and third key pad 220. Therefore, the user can operate the second and third key pads 112 and 220 with both hands conveniently. As the sliding display unit 40 is positioned between the second and third key pads 112 and 220, further, the user can watch the displayed data in a landscape mode.

As shown in FIGS. 4 to 6, the first and second key pads 110 and 112 are disposed at a desired depth on the inner surface 101 of the body 10 and the third key pad 220 is disposed at a desired depth on the inner surface 202 of the folder 20. As a result, the sliding display unit 40 is safely received in the inner surface of the folder 10. When the folder 10 is fully opened, the sliding display unit 40 can slide on the body 10 and folder 20. As shown in FIG. 4, when the folder is open at a desired angle to communicate with the other, the sliding display unit 40 is still safely received on the inner surface 202 of the folder 20. As shown in FIG. 1, in the case that the folder 20 is completely closed, the sliding display unit 40 is also received on the inner surface 202 of the folder 20.

Further, the sliding display unit 40 rotates with the folder 20. When the rotation of the folder 20 to the open position is completed, the sliding display unit 40 can slide on the folder 20 and the body 10 while facing the inner surfaces of the body 10 and folder 20.

The hinge unit 30 includes outer hinge arms 310 and 312 which protrude from the inner surface 101 of the body 10 and inner hinge arm 314 and 316 which protrude from the inner surface 202 of the folder 20 to be coaxially connected with the outer hinge arms 310 and 312. The outer hinge arms 310 and 312 and the inner hinge arms 314 and 316 form pairs which symmetrically face each other. The pair of the inner hinge arms 314 and 316 support the sliding movement of the sliding display unit 40. Each side of the sliding display unit 40 comes in surface contact with a respective end surface of the inner hinge arms 314 and 316 in order that the sliding display unit 40 is guided and supported by means of the inner hinge arms 314 and 316.

Preferably, the hinge unit 30 has a truncated cone shape. The inner and outer hinge arms in particular have a truncated cone shape.

Preferably, the sliding display unit 40 slides straight, in a plane that is parallel to the plane in which body 10 and folder 20 lie. The sliding display unit 40 includes a projection 414 at an end portion thereof which protrudes perpendicular to a surface of the sliding display unit 40 while extending parallel with an axis of the hinge axis A to help the sliding movement of the sliding display unit 40. The projection 414 is disposed over the inner surface 101 of the body to be parallel with the hinge axis A. FIGS. 5 and 6 show the portable communication device in which the sliding display unit 40 is sliding on the body 10 and the folder 20. Further, the projection 414 may be disposed in a region of the hinge unit 30. FIG. 4 shows the sliding display unit 40 of which the projection 414 is placed in the region of the hinge unit 30. Of course, the sliding display unit 40 can slide only when the body 10 and the folder 20 are placed in the same plane.

Furthermore, the sliding display unit 40 includes a display screen 410 which is disposed on a surface thereof and a speaker unit 412 which is arranged near the display screen 410. A microphone unit 114 is disposed at an edge of the inner surface 101 of the body 10.

In the sliding display unit 40 as shown in FIG. 4, the first and second key pads 110 and 112 are arranged to face the display screen 410 and the speaker unit 412 adjacent to the hinge axis A. As shown in FIG. 5, the second key pad 112 and the third key pad 220 are respectively arranged on the body 10 and the folder 20 to be symmetric to the sliding display unit 40 when the sliding display unit 40 is slid and positioned at a center portion of the portable communication device.

In the state of FIG. 4, the portable communication device is preferably used in a communication mode. In the state of FIG. 5, the portable communication device is preferably used in a game mode or a chatting mode. In the game mode or the chatting mode, it is often required to operate keys quickly and accurately. Therefore, when the user can operate keys with both hands, accurate and rapid key operation can be achieved.

Preferably, the first key pad 110 is mainly comprised of functional keys. The second key pad 112 preferably consists of numeric keys. The third key pad 220 is preferably a keyboard, for example a QWERTY keypad.

As described above, the portable communication device of the present invention can give the user an optimal user interface environment in the chatting mode or the game mode. Further, the present invention supplies the structural rigidity to the portable communication device. In particular, the portable communication device has a stable structure with respect to the sliding movement of the sliding display unit. Particularly, the present invention permits the sliding display unit to provide a landscape function view in the chatting mode or the game mode, which allows the user to operate the keys with both hands. There are advantages in that since the portable communication device is provided with the hinge reinforcement portion and the metallic hinge cover to protect against damage to the hinge unit caused by dropping the portable communication device. On the other hand, there is another advantage in that the portable communication device reliably secures the sliding movement of the sliding display unit so as to open and close the key pads easily.

While the invention has been shown and described with reference to certain preferred embodiments thereof, it will be understood by those skilled in the art that various changes in form and details may be made therein without departing from the scope of the invention as defined by the appended claims.

## Claims

1. A portable communication device comprising:
a body (10);
a folder (20) which is adapted to be folded or unfolded with respect to the body (10), and
a hinge unit (30) for pivotally connecting the folder (20) to the body (10),
wherein a sliding display unit (40) which is folded or unfolded together with the folder (20) with respect to the body (10) is adapted to slide in a longitudinal direction of the folder (20), **characterized in that** the sliding display unit (40) rotates with the folder (20) while facing the body (10) and is adapted to slide on the body and folder after completion of rotation to open and close a region of an inner surface (101) of the body (10) and an inner surface (202) of the folder (20).

2. The portable communication device according to claim 1, **characterized in that** the body (10) has a first key pad (110) and a second key pad (112) which are arranged on the inner surface (101) of the body, the first key pad (110) adapted to be selectively opened and closed with respect to the sliding movement of the sliding display unit (40) after the folder (20) is unfolded, and a second key pad (112) being always open without regard to the sliding movement of the sliding display unit after the folder is unfolded.

3. The portable communication device according to claim 1, wherein the folder (20) has a third key pad (220) which is disposed on the inner surface (202) of the folder to be selectively opened as a result of the sliding movement of the sliding display unit (40).

4. The portable communication device according to claim 3, wherein the sliding display unit (40) is adapted to slide in a position between the second and third key pads in which position the first key pad (110) is hidden by the display unit (40) while the second and third key pads (112,220) are completely open.

5. The portable communication device according to claim 3, wherein the first and second key pads (110,112) are disposed in a depth on the inner surface (101) of the body (10) and the third key pad (220) is disposed in a depth on the inner surface (202) of the folder (20) to be adapted to safely receive the sliding display unit (40) when the folder is open or fully closed and to allow sliding of the sliding display unit (40) on body and folder, when the folder is open.

6. The portable communication device according to claim 1, wherein the sliding display unit (40) further comprises a speaker unit (412).

7. The portable communication device according to claim 1, wherein the hinge unit (30) includes an outer hinge arm (310,312) which protrudes from the body (10) and an inner hinge arm (314,316) which protrudes from the folder (20) to be coaxially connected with the outer hinge arm for supporting the sliding movement of the sliding display unit (40).

8. The portable communication device according to claim 7, wherein the inner and outer hinge arms (314,316; 310,312) have a truncated cone shape.

9. The portable communication device according to claim 1, wherein the hinge unit (30) further comprises first hinge reinforcement portions (305,306) which project along a hinge axis, A, from sides of the body (10) outwardly and second hinge reinforcement portions (303,304) which project along the axis of the hinge axis from sides of the folder (20), the first and second hinge reinforcement portions being symmetric to the hinge axis.

10. The portable communication device according to claim 9, wherein the first hinge reinforcement portions have a gradually increasing width from the body toward the end of the hinge axis, while the second hinge reinforcement portions have a gradually increasing width from the folder toward the end of the hinge axis.

11. The portable communication device according to claim 1, wherein the sliding display unit (40) further includes a projection (414) at one of its end portions which protrudes perpendicularly to a surface of the sliding display unit while extending parallel to the hinge axis, A, which projection is a hold for sliding the sliding display unit (40), wherein the projection is disposed in parallel with the hinge axis, A.

12. The portable communication device according to claim 1, wherein the folder (20) has at least of an auxiliary display unit (210), a camera lens (212), and a call indication lamp (216), which are arranged on the outer surface of the folder (20).

13. The portable communication device according to claim 1, wherein the hinge unit (30) further includes metallic hinge covers (301,302) at an outmost portion of the hinge unit.

14. The portable communication device according to claim 1, wherein the sliding display unit (40) is adapted to slide when body (10) and folder (20) are unfolded in horizontal arrangement, wherein regions of the inner surfaces of the body and folder which are remote from the hinge axis are opened and wherein a sliding display unit is placed between those regions remote from the hinge axis.

15. The portable communication device according to one of the previous claims, wherein the sliding display unit (40) slides linearly.

## Patentansprüche

1. Tragbare Kommunikationsvorrichtung, die umfasst:
einen Hauptkörper (10);
einen Klappdeckel (20), der so eingerichtet ist, dass er in Bezug auf den Hauptkörper (10) zu- oder aufgeklappt wird; und
eine Scharniereinheit (30), die den Klappdeckel (20) schwenkbar mit dem Hauptkörper (10) verbindet,
wobei eine gleitende Anzeigeeinheit (40), die zusammen mit dem Klappdeckel (20) in Bezug auf den Körper (10) zu- oder aufgeklappt wird, so eingerichtet ist, dass sie in der Längsrichtung des Klappdeckels (20) gleitet,
**dadurch gekennzeichnet, dass**
sich die gleitende Anzeigeeinheit (40) mit dem Klappdeckel (20) dreht und dem Hauptkörper (10) zugewandt und so eingerichtet ist, dass sie nach Abschluss der Drehung auf dem Körper und dem Klappdeckel gleitet, um einen Bereich einer Innenfläche (101) des Körpers (10) und einer Innenfläche (202) des Klappdeckels (20) zu öffnen und zu schließen.

2. Tragbare Kommunikationsvorrichtung nach Anspruch 1
**dadurch gekennzeichnet, dass**
der Hauptkörper (10) ein erstes Tastenfeld (110) und ein zweites Tastenfeld (112) aufweist, die an der Innenfläche (101) des Hauptkörpers angeordnet sind, wobei das erste Tastenfeld (110) so eingerichtet ist, dass es in Bezug auf die Gleitfeldbewegung der gleitenden Anzeigeeinheit (40) selektiv geöffnet und geschlossen wird, nachdem der Klappdeckel (20) aufgeklappt ist, und ein zweites Tastenfeld (112) unabhängig von der Gleitbewegung der gleitenden Anzeigeeinheit stets offen ist, nachdem der Klappdeckel aufgeklappt ist.

3. Tragbare Kommunikationsvorrichtung nach Anspruch 1, wobei der Klappdeckel (20) ein drittes Tastenfeld (220) aufweist, das an der Innenfläche (202) des Klappdeckels angeordnet ist und als Resultat der Gleitbewegung der gleitenden Anzeigeeinheit (40) selektiv geöffnet wird.

4. Tragbare Kommunikationsvorrichtung nach Anspruch 3, wobei die gleitende Anzeigeeinheit (40) so eingerichtet ist, dass sie an eine Position zwischen dem zweiten und dem dritten Tastenfeld gleitet, wobei in dieser Position das erste Tastenfeld (110) durch die Anzeigeeinheit (40) verborgen wird, während das zweite und das dritte Tastenfeld (112, 220) vollständig offen sind.

5. Tragbare Kommunikationsvorrichtung nach Anspruch 3, wobei das erste und das zweite Tastenfeld (110, 112) in einer Tiefe an der Innenfläche (101) des Hauptkörpers (10) angeordnet sind und das dritte Tastenfeld (220) in einer Tiefe an der Innenfläche (202) des Klappdeckels (20) angeordnet und so eingerichtet ist, dass es die gleitende Anzeigeeinheit (40) sicher aufnimmt, wenn der Klappdeckel offen oder vollständig geschlossen ist, und Gleiten der gleitenden Anzeigeeinheit (40) an dem Hauptkörper und dem Klappdeckel zulässt, wenn der Klappdeckel offen ist.

6. Tragbare Kommunikationsvorrichtung nach Anspruch 1, wobei die gleitende Anzeigeeinheit (40) des Weiteren eine Lautsprechereinheit (412) umfasst.

7. Tragbare Kommunikationsvorrichtung nach Anspruch 1, wobei die Scharniereinheit (30) einen äußeren Gelenkarm (310, 312) enthält, der von dem Körper (10) vorsteht, sowie einen inneren Scharnierarm (314, 316), der von dem Klappdeckel (20) so vorsteht, dass er koaxial mit dem äußeren Gelenkarm verbunden ist, um die Gleitbewegung der gleitenden Anzeigeeinheit (40) zu unterstützen.

8. Tragbare Kommunikationsvorrichtung nach Anspruch 7, wobei der innere und der äußere Scharnierarm (314, 316; 310, 312) eine Kegelstumpfform haben.

9. Tragbare Kommunikationsvorrichtung nach Anspruch 1, wobei die Scharniereinheit (30) des Weiteren erste Scharnier-Verstärkungsabschnitte (305, 306), die entlang einer Scharnierachse A von Seiten des Körpers (10) nach außen vorstehen, sowie zweite Scharnier-Verstärkungsabschnitte (303, 304) umfasst, die entlang der Achse der Scharnierachse von Seiten des Klappdeckels (20) vorstehen, wobei die ersten und die zweiten Scharnier-Verstärkungsabschnitte symmetrisch zu der Scharnierachse sind.

10. Tragbare Kommunikationsvorrichtung nach Anspruch 9, wobei die ersten Scharnier-Verstärkungsabschnitte eine von dem Hauptkörper zum Ende der Scharnierachse hin allmählich zunehmende Breite haben, während die zweiten Scharnier-Verstärkungsabschnitte eine von dem Klappdeckel zum Ende der Scharnierachse hin allmählich zunehmende Breite haben.

11. Tragbare Kommunikationsvorrichtung nach Anspruch 1, wobei die gleitende Anzeigeeinheit (40) des Weiteren einen Vorsprung (414) an einem ihrer Endabschnitte enthält, der senkrecht zu einer Oberfläche der gleitenden Scharniereinheit vorsteht und sich dabei parallel zu der Gelenkachse A erstreckt, wobei der Vorsprung ein Gleitanschlag für die gleitende Anzeigeeinheit (40) ist und der Vorsprung parallel zu der Scharnierachse A angeordnet ist.

12. Tragbare Kommunikationsvorrichtung nach Anspruch 1, wobei der Klappdeckel (20) wenigstens eine Zusatz-Anzeigeeinheit (210), ein Kameraobjektiv (212) und eine Rufanzeigeleuchte (216) aufweist, die an der Außenfläche des Klappdeckels (20) angeordnet sind.

13. Tragbare Kommunikationsvorrichtung nach Anspruch 1, wobei die Scharniereinheit (30) des Weiteren Scharnierabdeckungen (301, 302) aus Metall an einem äußersten Abschnitt der Scharniereinheit enthält.

14. Tragbare Kommunikationsvorrichtung nach Anspruch 1, wobei die gleitende Anzeigeeinheit (40) so eingerichtet ist, dass sie gleitet, wenn der Hauptkörper (10) und der Klappdeckel (20) in horizontaler Anordnung aufgeklappt werden, und Bereiche der Innenflächen des Hauptkörpers und des Klappdeckels, die von der Scharnierachse entfernt sind, geöffnet werden, und wobei eine gleitende Anzeigeeinheit zwischen diesen Bereichen entfernt von der Scharnierachse angeordnet wird.

15. Tragbare Kommunikationsvorrichtung nach einem der vorangehenden Ansprüche, wobei die gleitende Anzeigeeinheit (40) linear gleitet.

## Revendications

1. Dispositif de communication portable, comprenant :
un corps (10) ;
un volet repliable (20) qui est conçu pour être replié ou déplié par rapport au corps (10) ; et
une unité de charnière (30) destinée à connecter de manière pivotante le volet repliable (20) sur le corps (10),
dans lequel une unité d'affichage coulissante (40), qui est repliée ou dépliée avec le volet repliable (20) par rapport au corps (10), est conçue pour coulisser dans une direction longitudinale du volet repliable (20),
**caractérisé en ce que** l'unité d'affichage coulissante (40) tourne avec le volet repliable (20) en faisant face au corps (10) et est conçue pour coulisser sur le corps et le volet repliable après la fin de la rotation afin de dégager et de refermer une région d'une surface intérieure (101) du corps (10) et une surface intérieure (202) du volet repliable (20).

2. Dispositif de communication portable selon la revendication 1, **caractérisé en ce que** le corps (10) possède un premier clavier (110) et un deuxième clavier (112) qui sont agencés sur la surface intérieure (101) du corps, le premier clavier (110) étant conçu pour être dégagé et refermé sélectivement en fonction du mouvement de coulissement de l'unité d'affichage coulissante (40) après que le volet repliable (20) est déplié, et le deuxième clavier (112) étant toujours dégagé sans tenir compte du mouvement de coulissement de l'unité d'affichage coulissante après que le volet repliable est déplié.

3. Dispositif de communication portable selon la revendication 1, dans lequel le volet repliable (20) possède un troisième clavier (220) qui est disposé sur la surface intérieure (202) du volet repliable afin d'être sélectivement dégagé à la suite du mouvement de coulissement de l'unité d'affichage coulissante (40).

4. Dispositif de communication portable selon la revendication 3, dans lequel l'unité d'affichage coulissante (40) est conçue pour coulisser dans une position située entre le deuxième et le troisième clavier, dans laquelle le premier clavier (110) est dissimulé par l'unité d'affichage (40) tandis que le deuxième et le troisième clavier (112, 220) sont complètement dégagés.

5. Dispositif de communication portable selon la revendication 3, dans lequel les premier et deuxième claviers (110, 112) sont disposés à une certaine profondeur sur la surface intérieure (101) du corps (10) et le troisième clavier (220) est disposé à une certaine profondeur sur la surface intérieure (202) du volet repliable (20), afin d'être adaptés pour recevoir sûrement l'unité d'affichage coulissante (40) lorsque le volet repliable est ouvert ou entièrement refermé et pour permettre le coulissement de l'unité d'affichage coulissante (40) sur le corps et le volet repliable lorsque le volet repliable est ouvert.

6. Dispositif de communication portable selon la revendication 1, dans lequel l'unité d'affichage coulissante (40) comprend en outre une unité de haut-parleur (412).

7. Dispositif de communication portable selon la revendication 1, dans lequel l'unité de charnière (30) comprend une branche de charnière extérieure (310, 312) qui fait saillie par rapport au corps (10) et une branche de charnière intérieure (314, 316) qui fait saillie par rapport au volet repliable (20) afin d'être connectée coaxialement avec la branche de charnière extérieure afin de supporter le mouvement de coulissement de l'unité d'affichage coulissante (40).

8. Dispositif de communication portable selon la revendication 7, dans lequel les branches de charnière intérieure et extérieure (314, 316 ; 310, 312) ont une forme de cône tronqué.

9. Dispositif de communication portable selon la revendication 1, dans lequel l'unité de charnière (30) comprend en outre des premières parties de renforcement de charnière (305, 306) qui font saillie vers l'extérieur par rapport à des côtés du corps (10) sur un axe de charnière A et des deuxièmes parties de renforcement de charnière (303, 304) qui font saillie par rapport à des côtés du volet repliable (20), sur l'axe de la charnière, les premières et deuxièmes parties de renforcement de charnière étant symétriques par rapport à l'axe de la charnière.

10. Dispositif de communication portable selon la revendication 9, dans lequel les premières parties de renforcement de charnière ont une largeur augmentant graduellement entre le corps et l'extrémité de l'axe de la charnière, tandis que les deuxièmes parties de renforcement de charnière ont une largeur augmentant graduellement entre le volet repliable et l'extrémité de l'axe de la charnière.

11. Dispositif de communication portable selon la revendication 1, dans lequel l'unité d'affichage coulissante (40) comprend en outre une saillie (414) sur l'une de ses parties d'extrémité, qui fait saillie perpendiculairement à une surface de l'unité d'affichage coulissante tout en s'étendant parallèlement à l'axe de charnière A, cette saillie formant une prise pour faire coulisser l'unité d'affichage coulissante (40), la saillie étant disposée parallèlement à l'axe de charnière A.

12. Dispositif de communication portable selon la revendication 1, dans lequel le volet repliable (20) possède au moins un élément, parmi une unité auxiliaire d'affichage (210), un objectif de prise de vue (212) et un témoin lumineux d'indication d'appel (216), qui est disposé sur la surface extérieure du volet repliable (20).

13. Dispositif de communication portable selon la revendication 1, dans lequel l'unité de charnière (30) comprend en outre des couvercles métalliques de charnière (301, 302) dans une partie le plus à l'extérieur de l'unité de charnière.

14. Dispositif de communication portable selon la revendication 1, dans lequel l'unité d'affichage coulissante (40) est conçue pour glisser lorsque le corps (10) et le volet repliable (20) sont dépliés et disposés horizontalement, dans lequel des régions des surfaces intérieures du corps et du volet repliable qui sont éloignées de l'axe de charnière sont dégagées, et dans lequel une unité d'affichage coulissante est placée entre ces régions éloignées de l'axe de charnière.

15. Dispositif de communication portable selon l'une quelconque des revendications précédentes, dans lequel l'unité d'affichage coulissante (40) coulisse linéairement.
